# EUROPÄISCHE PATENTSCHRIFT

(11) **EP 0 779 464 B1**
(45) Veröffentlichungstag und Bekanntmachung des Hinweises auf die Patenterteilung: **25.02.1998**
(21) Anmeldenummer: 96118863.8
(22) Anmeldetag: 26.11.1996
(51) Int. Cl.: F16L 33/08

(54) **Einteiliges Gehäuse einer Schneckengewindeschelle**
One-piece housing for a worm drive clamp
Boîte unique pour un collier de serrage à vis tangente

(30) Priorität: 11.12.1995 DE 19546077
(43) Veröffentlichungstag der Anmeldung: 18.06.1997
(73) Patentinhaber: Rasmussen GmbH, D-63477 Maintal (DE)
(72) Erfinder: Sauer, Heinz, 63549 Ronneburg (DE)
(74) Vertreter: Knoblauch, Ulrich, Dr.-Ing.

(56) Entgegenhaltungen:
- DE-A- 3 431 751
- DE-C- 3 941 135

## Beschreibung

Die Erfindung bezieht sich auf ein einteiliges Gehäuse einer Schneckengewindeschelle, mit einem gewölbten Gehäuseoberteil zur Aufnahme des Schaftes einer Spannschraube mit Kopf und zur Abstützung des Kopfes am einen Öffnungsrand des Gehäuseoberteils, mit einem Gehäuseunterteil zur Aufnahme eines mit Gewindeabschnitten versehenen Endabschnitts eines Schellenbandes unter Eingriff des Spannschraubengewindes in die Gewindeabschnitte und zur Aufnahme des anderen Endabschnitts des Schellenbandes unter formschlüssiger Verbindung mit dem Boden des Gehäuses, wobei das Gehäuseunterteil nur einen seitlichen Ausleger aufweist, der das Gehäuse gegen eine Drehung beim Festziehen der Spannschraube abstützt, und der Ausleger eine obere Wand aus zwei sich überlappenden Wandabschnitten und eine seitliche vom Boden hochragende Wand aufweist, die über einen umgebogenen Abschnitt in den oberen der sich überlappenden Wandabschnitte übergeht.

Bei einem bekannten Gehäuse dieser Art (Prospekt NORMA-Sortimente Nr. 11 der Rasmussen GmbH vom Februar 1994) ist der untere Wandabschnitt der oberen Wand des Auslegers um obere Randabschnitte der hochragenden Wand auf die Außenseite der hochragenden Wand umgebogen und mit langgestreckten Öffnungen versehen, durch die vom oberen Rand der hochstehenden Wand wegführende Lappen hindurchgeführt und auf die Oberseite des unteren Wandabschnitts umgebogen sind.

Der Erfindung liegt die Aufgabe zugrunde, den Materialaufwand des Gehäuses der Schneckengewindeschelle zu verringern, ohne die Festigkeit des Gehäuses zu vermindern.

Erfindungsgemäß ist diese Aufgabe dadurch gelöst, daß sich der untere der sich überlappenden Wandabschnitte der oberen Wand des Auslegers teilweise bis an die Innenseite der vom Boden hochragenden Wand und teilweise in einen Ausschnitt des umgebogenen Abschnitts erstreckt.

Bei dieser Lösung entfällt der bei dem Gehäuse der bekannten Schneckengewindeschelle auf die Außenseite der hochstehenden Wand des Auslegers umgebogene Teil des unteren Wandabschnitts der oberen Wand des Auslegers. Auf diesen Teil kann verzichtet werden, da er - im Gegensatz zur bisherigen Meinung - praktisch nicht durch Spannkräfte belastet wird und demzufolge nicht zur Festigkeit des Gehäuses beiträgt. Ein Verzicht auf diesen Teil hat ferner den Vorteil, daß die Breite des Gehäuses um etwa die Materialdicke des Stahlbleches, aus dem das Gehäuse hergestellt ist, verringert wird. Dementsprechend geringer ist der erforderliche Einbauraum.

Vorzugsweise ist dafür gesorgt, daß der Ausschnitt ein von dem auf seiten des Spannschraubenkopfes liegenden Öffnungsrand des Auslegers aus in Längsrichtung des umgebogenen Abschnitts ragender Schlitz ist. Hierbei kann sich der untere Wandabschnitt der oberen Wand des Auslegers mit seinem in den Schlitz ragenden Teil auf der durch den Schlitz begrenzten Oberkante der hochragenden Wand des Auslegers und mit seinem sich an der Innenseite der hochragenden Wand abstützenden Teil an der Unterseite des oberen Wandabschnitts anlegen und einem auf das Gehäuseoberteil beim Spannen der Spannschraube durch das Schellenband über die Schraube um deren Querachse ausgeübten Drehmoment und damit einer Aufweitung des Gehäuses im Bereich des Auslegers entgegenwirken.

Sodann kann dafür gesorgt sein, daß sich die einander überlappenden Wandabschnitte über die gesamte Länge des Auslegers tangential zum Schellenumfang erstrecken. Dies ergibt eine besonders hohe Festigkeit der oberen Wand des Auslegers gegen eine Aufweitung des Gehäuseoberteils durch das erwähnte Drehmoment.

Sodann kann der obere Wandabschnitt des Auslegers nach oben gewölbt sein. Hierbei ist die obere Wand des Auslegers verhältnismäßig steif, um eine Aufweitung des Auslegers und damit des Gehäuseoberteils beim Spannen zu verhindern.

Ferner ist es günstig, wenn der umgebogene Abschnitt eben ist und mit dem oberen Wandabschnitt und der hochragenden Wand einen stumpfen Winkel einschließt. Auch dies trägt zu einer Versteifung der oberen Wand des Auslegers gegen ein Aufbiegen bei.

Eine weitere Versteifung der oberen Wand des Auslegers läßt sich dadurch erreichen, daß der umgebogene Abschnitt in an die Öffnungsränder des Auslegers angrenzenden Endbereichen eben und in einem mittleren Bereich zwischen den Endbereichen im Querschnitt etwa dreieckförmig gebogen ist, daß die Endbereiche mit der oberen und der hochragenden Wand einen stumpfen Winkel einschließen und daß der untere Wandabschnitt der oberen Wand in den mittleren Bereich mit einem Vorsprung eingreift.

Alternativ zu den geschilderten Ausführungen der oberen Wand und des umgebogenen Teils oder zusätzlich können der obere und der untere Wandabschnitt stoffschlüssig verbunden sein. Sie sind dann besonders steif.

Die stoffschlüssige Verbindung kann durch Punktschweißungen, vorzugsweise Buckelschweißungen, gebildet sein. Punktschweißungen lassen sich einfach und rasch herstellen. Eine Buckelschweißung hat den Vorteil, daß sich gleichzeitig mehrere Punkte sicher verschweißen lassen. Hierbei werden in die zu verbindenden Bleche kleine Buckel oder Warzen getrieben. Dann werden die Bleche zwischen Elektroden aufeinandergepreßt und durch einen Stromstoß mehrere Buckel gleichzeitig verschweißt.

Zusätzlich oder alternativ kann der umgebogene Abschnitt in Richtung seiner Biegung verlaufende Sicken aufweisen. Diese Sicken bewirken eine Versteifung der Biegung und verhindern daher ebenfalls ein Aufbiegen des oberen Wandabschnitts.

Vorzugsweise ist ferner dafür gesorgt, daß das Gehäuse gehärteten Stahl und das Gehäuseoberteil einen Rückdrehsicherungslappen für den Eingriff in eine umlaufende Rille der Spannschraube zwischen Kopf und Gewinde aufweist. Das gehärtete Gehäuse ist besonders steif, so daß es sich beim Spannen einer Verformung widersetzt. Statt mit bisher zwei Rückdrehsicherungslappen kommt man mit einem aus. Aufgrund der Härtung des Gehäuses ist er elastisch, so daß er vor dem Härten in die gewünschte Endlage gebogen und bei der Einführung des Schraubenschaftes in seine Ausgangslage zurückgebogen wird, um ihn danach wieder in die Endlage, d.h. in die Rille zwischen Kopf und Gewinde, zurückfedern zu lassen.

Da das gesamte Gehäuse nach dem Härten eine gewisse Elastizität aufweist, kann mit Vorteil dafür gesorgt sein, daß der sich in den Ausschnitt des umgebogenen Abschnitts erstreckende Teil des unteren Wandabschnitts einen Abstand von der auf seiten des Spannschraubenkopfes liegenden Kante des oberen Wandabschnitts aufweist. Das Oberteil des Gehäuses kann dann zusammen mit dem unteren Wandabschnitt der oberen Wand des Auslegers beim Festziehen der Spannschraube aufgrund seiner Elastizität geringfügig um eine zum Boden des Gehäuses senkrechte Achse relativ zum Gehäuseboden verdreht und dadurch elastisch vorgespannt werden. Wenn sich dann der eingespannte Schlauch bei sinkender Umgebungstemperatur zusammenzieht, kann sich die Schelle aufgrund dieser elastischen Vorspannung des Gehäuses etwas zusammenziehen und diese Schrumpfung des Schlauchmaterials ausgleichen. Umgekehrt kann die Schelle bei steigender Temperatur und sich dementsprechend ausdehnendem Schlauchmaterial dieser Ausdehnung nachgeben, ohne das Schlauchmaterial übermäßig zu belasten.

Der erwähnte Abstand sollte wenigstens etwa gleich π·Δd sein, wobei Δd der Änderung des Außendurchmessers eines von der Schneckengewindeschelle eingespannten Schlauches aus elastomerem Material in Abhängigkeit von der Temperatur im zulässigen Betriebstemperaturbereich des Schlauches entspricht. Auf diese Weise können Dickenänderungen des Schlauchmaterials über den gesamten Betriebstemperaturbereich weitgehend ausgeglichen werden.

Nachstehend werden Ausführungsbeispiele der Erfindung anhand der beigefügten Zeichnungen näher beschrieben. Es zeigen:
- Fig. 1: eine Seitenansicht einer Schneckengewindeschelle mit einem erfindungsgemäßen Gehäuse, bei der das Schellenband teilweise weggebrochen ist,
- Fig. 2: den Schnitt II-II der Fig. 1,
- Fig. 3: eine perspektivische Vorderansicht des Gehäuses der Schneckengewindeschelle nach Fig. 1,
- Fig. 4: eine perspektivische Rückansicht des hinteren Teils des Gehäuses nach Fig. 3 und
- Fig. 5 bis 12: Abwandlungen des Gehäuses der Schneckengewindeschelle nach den Fig. 1 bis 4.

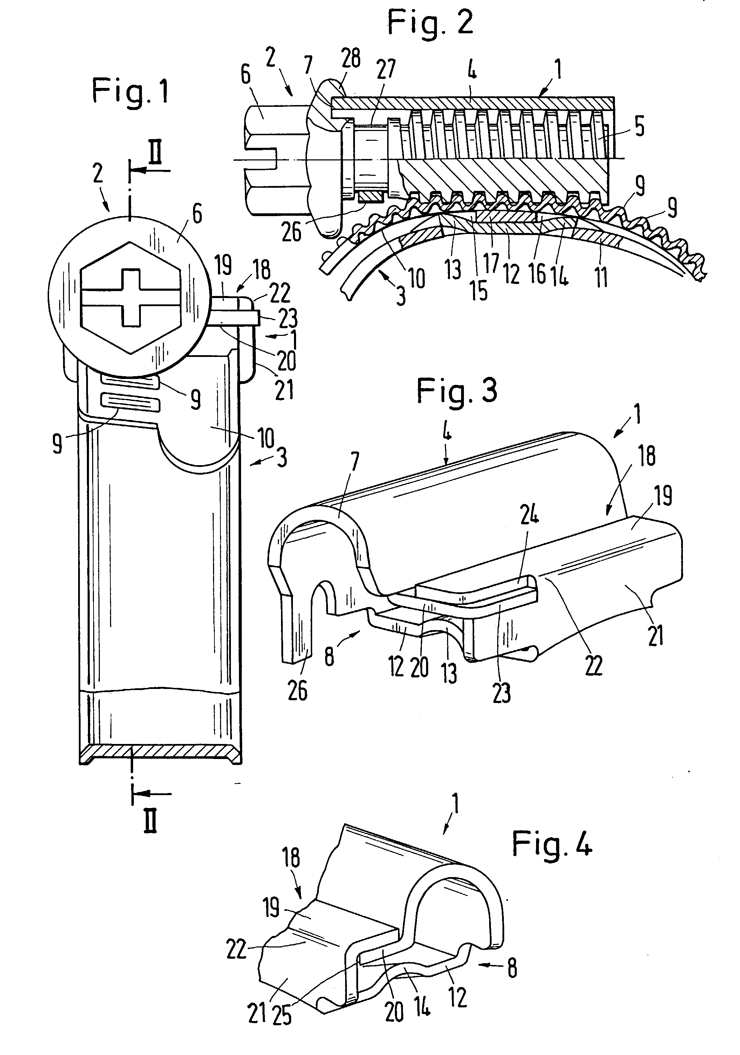

Die Schneckengewindeschelle nach den Fig. 1 bis 4 besteht aus einem Gehäuse 1, einer Spannschraube 2 und einem Schellenband 3. Alle drei Teile bestehen im wesentlichen aus Stahl. Gegebenenfalls sind sie verzinkt.

Das Gehäuse hat ein gewölbtes Oberteil 4 zur Aufnahme des mit Gewinde 5 versehenen Schaftes der Spannschraube 2 und zur Abstützung des Kopfes 6 der Spannschraube am einen Öffnungsrand 7 des Gehäuseoberteils 4. Ferner hat das Gehäuse ein Unterteil 8 zur Aufnahme des einen mit Gewindeabschnitten 9 versehenen Endabschnitts 10 des Schellenbandes 3, wobei das Spannschraubengewinde 5 in die Gewindeabschnitte 9 eingreift, wie es in Fig. 2 dargestellt ist. Ferner nimmt das Gehäuseunterteil 8 den anderen Endabschnitt 11 des Schellenbandes 3 unter formschlüssiger Verbindung mit dem Boden 12 des Gehäuses 1 auf. Zur Ausbildung dieser formschlüssigen Verbindung hat der Boden 12 an jedem seiner axialen Enden eine nach oben gedrückte Sicke 13 bzw. 14, die jeweils in ein viereckiges Loch 15 bzw. 16 in einem radial nach außen gedrückten Abschnitt des Endabschnitts 11 des Schellenbandes 3 eingreifen. Die Löcher 15 und 16 sind dabei durch einen Quersteg 17 getrennt. Die Gewindeabschnitte 9 sind in den Endabschnitt 10 des Schellenbandes 3 geprägt.

Das Unterteil 8 des Gehäuses 1 hat auf der einen Längsseite einen seitlichen Ausleger 18, der das Gehäuse 1 gegen eine Drehung beim Festziehen der Spannschraube 2 abstützt. Der Ausleger hat eine obere Wand aus zwei sich überlappenden Wandabschnitten 19 und 20 und eine seitliche, vom Boden 12 hochragende Wand 21, die über einen umgebogenen Abschnitt 22 in den oberen (19) der sich überlappenden Wandabschnitte 19, 20 übergeht. Der untere Wandabschnitt 20 der oberen Wand des Auslegers 18 erstreckt sich mit einem Teil 23 bis in einen Ausschnitt 24 des umgebogenen Abschnitts 22 und mit einem Teil 25 bis an die Innenseite der vom Boden 12 hochragenden Wand 21.

Der Ausschnitt 24 ist bei diesem Ausführungsbeispiel ein von dem auf seiten des Spannschraubenkopfes 6 liegenden Öffnungsrand des Auslegers 18 aus in Längsrichtung des umgebogenen Abschnitts 22 ragender Schlitz, und die einander überlappenden Endabschnitte 19, 20 erstrecken sich über die gesamte Länge des Auslegers 18 tangential zum Schellenumfang. Es ist aber auch möglich, den näher beim Schraubenkopf liegenden, sich über die Länge des Ausschnitts erstreckenden Teil des oberen Wandabschnitts 19 wegzulassen, so daß sich der Ausschnitt 24 über die ge-. samte Breite des unteren Wandabschnitts 20 bis zum gewölbten Gehäuseoberteil 4 erstreckt. Denn jener Teil trägt weniger zur Versteifung des Gehäuses 1 bei, wie nachstehend erläutert wird.

Beim Spannen der Spannschraube 2 übt der Endabschnitt 10 des Schellenbands 3 über seine mit dem Schraubengewinde 5 in Eingriff stehenden Gewindeabschnitte 9 ein Drehmoment auf die Spannschraube 2 um eine Achse aus, die quer zur Längsachse der Spannschraube und senkrecht zur Ebene eines Umkreises des Schellenbandes steht, und zwar entgegen dem Uhrzeigersinn in Fig. 2. Dadurch ist das freie in Fig. 2 rechte Ende der Spannschraube 2 bestrebt, das Gehäuseoberteil 4 nach oben und dadurch das in Fig. 3 hintere Ende der aus den Wandabschnitten 19 und 20 bestehenden oberen Wand des Auslegers 18 ebenfalls nach oben zu drücken, so daß sich der Ausleger 18 und damit auch das Gehäuseoberteil 4 aufweiten würde. Dem wirkt jedoch die Tatsache entgegen, daß sich der obere Wandabschnitt 19 und auch der untere Wandabschnitt 20 bis zu dem in Fig. 3 hinteren Ende des Gehäuses 1 bzw. des Gehäuseoberteils 4 erstrecken und sich der hintere Teil 25 des unteren Wandabschnitts 20 auch an dem dort noch vorhandenen hinteren Teil des oberen Wandabschnitts 19 abstützt. Hierbei trägt der näher beim Schraubenkopf 2 liegende vordere Teil des oberen Wandabschnitts 19 weniger dazu bei, ein Hochdrücken bzw. Aufbiegen des Gehäuses 1 zu verhindern, so daß er auch entfallen könnte.

Da sich der Teil 23 des unteren Wandabschnitts 20 nicht über die Außenseite der hochragenden Wand 21 nach unten in Richtung auf den Boden 12 erstreckt, sondern sein freies in Fig. 1 rechts liegendes Ende etwa mit der Außenseite der hochragenden Wand 21 fluchtet, kommt man im Vergleich zu einer bekannten, gattungsgemäßen Schneckengewindeschelle mit weniger Material für das Gehäuse aus. Ferner ist das Gehäuse etwa um die Dicke des Gehäuse- blechs schmaler als im bekannten Fall. Dennoch hat das Gehäuse eine höhere Festigkeit als im bekannten Fall, da der obere Wandabschnitt 19 im Vergleich zu dem bekannten Fall eine höhere Biegesteifigkeit hat und der im bekannten Fall auf die Außenseite der hochragenden Wand 21 umgebogene untere Wandabschnitt der oberen Wand des Auslegers praktisch nicht zur Versteifung des Gehäuses beiträgt.

Das Gehäuse 1 ist aus einem ungehärteten Metall hergestellt, so daß ein Rückdrehsicherungslappen 26, der am unteren Rand eines über den Boden 12 nach vorn hinausragenden Teils des Gehäuseoberteils 4 an der dem Ausleger 18 gegenüberliegenden Wand des Gehäuseoberteils 4 ausgebildet ist und zunächst nach unten ragt, wie es in Fig. 3 dargestellt ist, nach dem Einführen des Schraubenschaftes in das Gehäuseoberteil 4 hochgebogen werden kann, so daß er in eine umlaufende Rille 27 der Spannschraube 2 zwischen Kopf 6 und Gewinde 5 eingreift, wie es in Fig. 2 dargestellt ist. Dieser Lappen 26 verhindert, daß sich die Spannschraube 12 beim Öffnen der Schneckengewindeschelle aus dem Gehäuse 1 herausdreht.

Der Spannschraubenkopf 6 greift ferner mit einem umlaufenden, einteilig mit dem Spannschraubenkopf 6 ausgebildeten Flansch 28 über den Öffnungsrand 7 des Gehäuseoberteils 4 hinweg, so daß sich der Spannschraubenkopf 6 beim Spannen auf dem Gehäuseoberteil 4 abstützt und auf diese Weise zusätzlich dem erwähnten Drehmoment entgegenwirkt.

Der Boden 12 des Gehäuses 1 ist in Umfangsrichtung der Schneckengewindeschelle, weitgehend entsprechend dem Schellendurchmesser, gewölbt, so daß er weitgehend der Krümmung des einzuspannenden Schlauches angepaßt ist und die Schneckengewindeschelle im festgezogenen Zustand einen weitgehend gleichförmigen Anpreßdruck über den gesamten Umfang des Schlauches ausübt, um eine möglichst dichte Verbindung zwischen dem Schlauch und dem Endabschnitt eines Rohres oder Rohrstutzens, auf dem der Schlauch befestigt wird, zu erzielen.

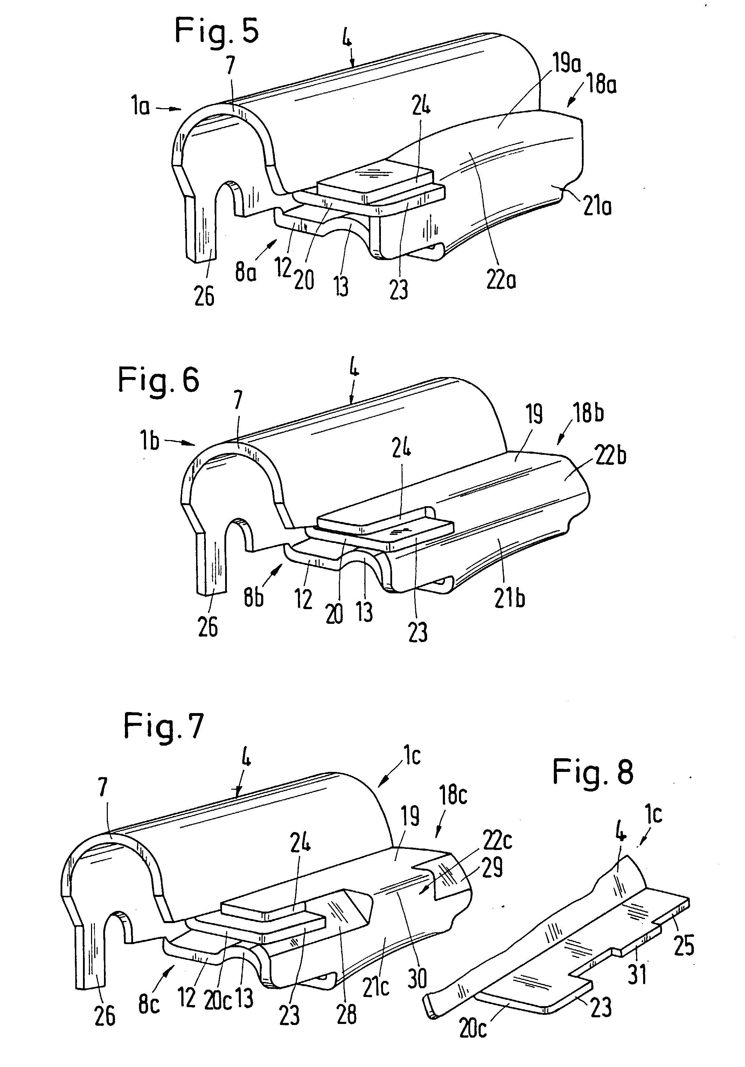

Das Ausführungsbeispiel des Gehäuses la nach Fig. 5 unterscheidet sich von dem nach Fig. 3 lediglich dadurch, daß der obere Wandabschnitt 19a des Auslegers 18a des unteren Gehäuseteils 8a und demzufolge auch der umgebogene Abschnitt 22a zwischen der hochragenden Wand 21a und dem oberen Wandabschnitt 19a nach oben gewölbt sind. Dies trägt zusätzlich zur Versteifung des oberen Wandabschnitts 19a und damit des Gehäuses 1a gegen ein Aufbiegen beim Spannen der Spannschraube 2 bei.

Das Ausführungsbeispiel des Gehäuses 1b nach Fig. 6 unterscheidet sich von dem nach Fig. 3 nur dadurch, daß der umgebogene Abschnitt 22b zwischen der hochragenden Wand 21b und dem oberen Wandabschnitt 19 eben ist und mit dem oberen Wandabschnitt 19 und der hochragenden Wand 21b einen stumpfen Winkel einschließt. Hierbei tragen die Biegekanten zwischen der hochragenden Wand 21b und dem oberen Wandabschnitt 19 des Auslegers 8b zur Versteifung gegen ein Hochbiegen des oberen Wandabschnitts 19 und damit zur Versteifung des oberen Gehäuseteils 4 gegen ein Hochdrücken beim Spannen der Spannschraube bei.

Das Ausführungsbeispiel des Gehäuses 1c nach den Fig. 7 und 8 unterscheidet sich von dem nach Fig. 3 dadurch, daß der umgebogene Abschnitt 22c zwischen der hochragenden Wand 21c und dem oberen Wandabschnitt 19 in an die Öffnungsränder des Auslegers 18c des unteren Gehäuseteils 8c angrenzenden Endbereichen 28 und 29 eben und in einem mittleren Bereich 30 zwischen den Endbereichen 28, 29 im Querschnitt etwa dreieckförmig gebogen ist, daß die Endbereiche 28, 29 mit dem oberen Wandabschnitt 19 und der hochragenden Wand 21c einen stumpfen Winkel einschließen und daß der untere Wandabschnitt 20c in den mittleren Bereich 30 mit einem Vorsprung 31 (Fig. 8) eingreift. Auch diese Ausbildung erhöht die Steifigkeit des oberen Wandabschnitts 19 gegen ein Aufbiegen.

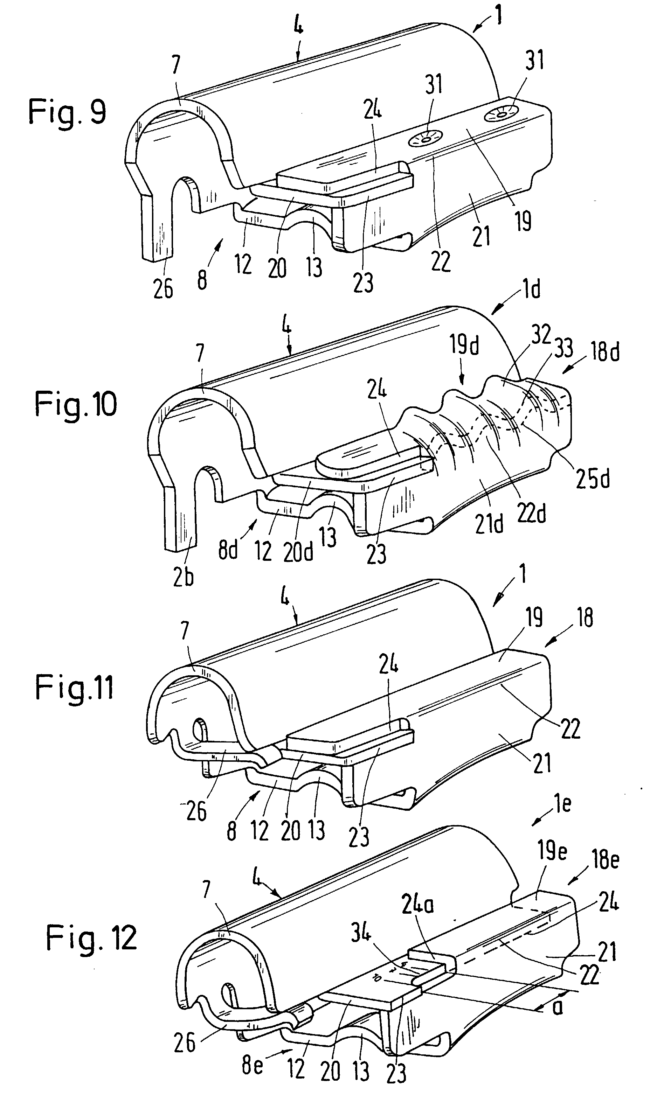

Das Ausführungsbeispiel des Gehäuses 1 nach Fig. 9 unterscheidet sich von dem nach Fig. 1 lediglich dadurch, daß der obere Wandabschnitt 19 und der untere Wandabschnitt 20 durch Punktschweißungen in Form von Buckelschweißungen 31 stoffschlüssig verbunden sind. Alternativ wäre es aber auch möglich, die beiden Wandabschnitte 19 und 20 zu verkleben. Buckelschweißungen 31 haben jedoch den Vorteil, daß sie leicht und rasch ohne zusätzliches Material durchgeführt werden können.

Das Ausführungsbeispiel des Gehäuses 1d nach Fig. 10 unterscheidet sich von dem nach Fig. 3 lediglich dadurch, daß der umgebogene Abschnitt 22d in Richtung seiner Biegung verlaufende Sicken 32 oder Wellungen aufweist, die sich von der hochragenden Wand 21d des Auslegers 18d des unteren Gehäuseteils 8d bis in den oberen Wandabschnitt 19d erstrecken. Auch der Teil 25d des unteren Wandabschnitts 20d ist in seinem Endbereich mit den Sicken 32 entsprechenden Sicken 33 oder Wellungen versehen. Die Sicken 32 erhöhen ebenfalls die Biegesteifigkeit des oberen Wandabschnitts 19d.

Das Ausführungsbeispiel des Gehäuses 1 nach Fig. 11 unterscheidet sich von dem nach Fig. 3 lediglich dadurch, daß es nach der Formgebung gehärtet worden und damit ebenfalls biegesteifer ist. Da sich der Rückdrehsicherungslappen 26 aus der in den Fig. 3 bis 10 dargestellten, unverformten Lage nicht in die in den Fig. 2 und 11 dargestellte Lage nach dem Einführen der Spannschraube 2 in das Gehäuse 1 bleibend verformen ließe, weil das Gehäusematerial nach der Härtung verhältnismäßig elastisch ist und der Rückdrehsicherungslappen 26 bei einem Versuch, ihn in die in Fig. 11 dargestellte Lage zu biegen, in seine Ausgangslage zurückfedern würde, wird der Rückdrehsicherungslappen 26 vor dem Härten in die in Fig. 11 dargestellte Lage hochgebogen und vor.sowie während Einführung der Spannschraube 2 in das obere Gehäuseteil 4 unter Überwindung seiner Rückstellfederkraft nach unten gebogen und nach dem Einführen der Spannschraube 2 freigegeben, so daß er durch seine Rückstellfederkraft in die Lage nach Fig. 11 zurückfedert und in die Rille 27 der Spannschraube 2 eingreift, wie es in Fig. 2 dargestellt ist.

Das Ausführungsbeispiel des Gehäuses le nach Fig. 12 unterscheidet sich von dem nach Fig. 3 ebenfalls dadurch, daß das Gehäuse le gehärtet ist, nachdem es in die dargestellte Form gebracht wurde. Darüber hinaus hat der sich in den Ausschnitt 24a des umgebogenen Abschnitts 22 erstreckende Teil 23 des unteren Wandabschnitts 20 einen Abstand a von der auf seiten des Spannschraubenkopfes 6 liegenden Kante des oberen Wandabschnitts 19e, die den Ausschnitt 24a begrenzt. Der Abstand a ist wenigstens etwa gleich π·Δd, wobei Δd der Änderung des Außendurchmessers eines von der Schneckengewindeschelle eingespannten Schlauches aus elastomerem Material in Abhängigkeit von der Temperatur im zulässigen Betriebstemperaturbereich des Schlauches entspricht. Die Wandabschnitte 19e und 20 sind daher beim Festziehen der Spannschraube 2 in Längsrichtung der Spannschraube 2 um den Betrag a unter leichter Verdrehung gegeneinander verschiebbar, wobei sie aufgrund der Elastizität des gehärteten Gehäuses le wieder um das Maß zurückfedern, um das sich der Schlauch bei einer Abkühlung zusammenziehen würde. Auf den Schlauch wird daher auch bei einer Schrumpfung des Schlauchmaterials aufgrund der Abkühlung noch eine ihn dicht an das Rohr oder den Rohrstutzen drückende Klemmkraft ausgeübt. Umgekehrt kann sich der Abstand a bei einer Ausdehnung des Schlauchmaterials aufgrund einer Temperaturerhöhung elastisch vergrößern, so daß keine übermäßige Klemmkraft auf das Schlauchmaterial ausgeübt wird. Der Betrag, um den sich die Wandabschnitte 19e und 20 bei einem vorbestimmten Nenndurchmesser des Schlauches verschieben müssen, um den gewünschten Zusammenziehungs- und Dehnungsausgleich des Schlauchmaterials zu erzielen, kann an einer Skala 34 auf der Oberseite des unteren Wandabschnitts 20 abgelesen werden, wobei die den Ausschnitt 24a begrenzende Vorderkante des oberen Wandabschnitts 19e des Auslegers 18e des unteren Gehäuseteils 8e als Zeiger dient.

Weitere Abwandlungen der dargestellten Ausführungsbeispiele können beispielsweise darin bestehen, daß auch das hintere Ende des umgebogenen Abschnitts 22 nach Fig. 3 mit einem dem Ausschnitt 24 entsprechenden Schlitz versehen wird, durch den der hintere Teil 25 des unteren Wandabschnitts 20, ebenso wie der Teil 23, nach außen ragt. Desgleichen können einige der dargestellten Abwandlungen gemeinsam bei ein und demselben Gehäuse angewandt werden, z.B. die Abwandlungen nach den Fig. 6 oder 7 und 9 oder 9 und 10.

## Patentansprüche

1. Einteiliges Gehäuse (1; la-le) einer Schneckengewindeschelle, mit einem gewölbten Gehäuseoberteil (4) zur Aufnahme des Schaftes einer Spannschraube (2) mit Kopf (6) und zur Abstützung des Kopfes (6) am einen Öffnungsrand (7) des Gehäuseoberteils (4), mit einem Gehäuseunterteil (8; 8a-8e) zur Aufnahme eines mit Gewindeabschnitten (9) versehenen Endabschnitts (10) eines Schellenbandes (3) unter Eingriff des Spannschraubengewindes (5) in die Gewindeabschnitte (9) und zur Aufnahme des anderen Endabschnitts (11) des Schellenbandes (3) unter formschlüssiger Verbindung mit dem Boden (12) des Gehäuses (1; 1a-1e), wobei das Gehäuseunterteil (8; 8a-8e) nur einen seitlichen Ausleger (18; 18a-18e) aufweist, der das Gehäuse (1; 1a-1e) gegen eine Drehung beim Festziehen der Spannschraube (2) abstützt, und der Ausleger (18; 18a-18e) eine obere Wand aus zwei sich überlappenden Wandabschnitten (19, 19a-19e; 20, 20c, 20d) und eine seitliche vom Boden (12) hochragende Wand (21; 21a-21d) aufweist, die über einen umgebogenen Abschnitt (22; 22a-22d) in den oberen (19; 19a-19e) der sich überlappenden Wandabschnitte übergeht, dadurch gekennzeichnet, daß sich der untere (20; 20c; 20d) der sich überlappenden Wandabschnitte (19, 19a-19e; 20, 20d, 20d) der oberen Wand des Auslegers (18; 18a-18e) teilweise bis an die Innenseite der vom Boden (12) hochragenden Wand (21; 21a-21d) und teilweise in einen Ausschnitt (24; 24a) des umgebogenen Abschnitts (22; 22a-22d) erstreckt.

2. Gehäuse nach Anspruch 1, dadurch gekennzeichnet, daß der Ausschnitt (24) ein von dem auf seiten des Spannschraubenkopfes (6) liegenden Öffnungsrand des Auslegers (18; 18a-18d) aus in Längsrichtung des umgebogenen Abschnitts (22; 22a-22d) ragender Schlitz ist.

3. Gehäuse nach Anspruch 1 oder 2, dadurch gekennzeichnet, daß sich die einander überlappenden Wandabschnitte (18; 18a-18d) über die gesamte Länge des Auslegers (18; 18a-18d) tangential zum Schellenumfang erstrecken.

4. Gehäuse nach einem der Ansprüche 1 bis 3, dadurch gekennzeichnet, daß der obere Wandabschnitt (19a) des Auslegers (18a) gewölbt ist.

5. Gehäuse nach einem der Ansprüche 1 bis 4, dadurch gekennzeichnet, daß der umgebogene Abschnitt (22b) eben ist und mit dem oberen Wandabschnitt (19) und der hochragenden Wand (21b) einen stumpfen Winkel einschließt.

6. Gehäuse nach einem der Ansprüche 1 bis 4, dadurch gekennzeichnet, daß der umgebogene Abschnitt (22c) in an die Öffnungsränder des Auslegers (18c) angrenzenden Endbereichen (28, 29) eben und in einem mittleren Bereich (30) zwischen den Endbereichen (28, 29) im Querschnitt etwa dreieckförmig gebogen ist, daß die Endbereiche (28, 29).mit dem oberen Wandabschnitt (19) und der hochragenden Wand (21c) einen stumpfen Winkel einschließen und daß der untere Wandabschnitt (20c) der oberen Wand in den mittleren Bereich (30) mit einem Vorsprung (31) eingreift.

7. Gehäuse nach einem der Ansprüche 1 bis 6, dadurch gekennzeichnet, daß der obere und der untere Wandabschnitt (19, 20) stoffschlüssig verbunden sind.

8. Gehäuse nach Anspruch 7, dadurch gekennzeichnet, daß die stoffschlüssige Verbindung durch Punktschweißungen, vorzugsweise Buckelschweißungen (31), gebildet ist.

9. Gehäuse nach einem der Ansprüche 1 bis 8, dadurch gekennzeichnet, daß der umgebogene Abschnitt in Richtung seiner Biegung verlaufende Sicken (32) aufweist.

10. Gehäuse nach einem der Ansprüche 1 bis 9, dadurch gekennzeichnet, daß das Gehäuse (1) gehärteten Stahl und das Gehäuseoberteil (4) einen Rückdrehsicherungslappen (26) für den Eingriff in eine umlaufende Rille (27) der Spannschraube (2) zwischen Kopf (6) und Gewinde (5) aufweist.

11. Gehäuse nach einem der Ansprüche 1 bis 10, dadurch gekennzeichnet, daß der sich in den Ausschnitt (24a) des umgebogenen Abschnitts (22) erstreckende Teil (23) des unteren Wandabschnitts (21) einen Abstand (a) von der auf seiten des Spannschraubenkopfes (2) liegenden Kante des oberen Wandabschnitts (19e) aufweist.

12. Gehäuse nach Anspruch 11, dadurch gekennzeichnet, daß der Abstand (a) wenigstens etwa gleich π·Δd ist, wobei Δd der Änderung des Außendurchmessers eines von der Schneckengewindeschelle eingespannten Schlauches aus elastomerem Material in Abhängigkeit von der Temperatur im zulässigen Betriebstemperaturbereich des Schlauches entspricht.

## Claims

1. One-piece housing (1; 1a-1e) of a worm drive hose clamp, with a vaulted housing upper part (4) for the seating of the shank of a straining screw (2) with head (6) and for the support of the head (6) at an opening edge (7) of the housing upper part (4), with a housing lower part (8; 8a-8e) for the seating of an end segment (10), which is provided with screw-thread segments (9), of a clamping band (3), where there exists an engagement of the straining screw thread (5) in the screw segments (9), and for the seating of the other end segment (11) of the clamping band (3), where there exists a positive-fit joining with the base (12) of the housing (1; 1a-1e), in conjunction with which the housing lower part (8; 8a-8e) exhibits only one side extension part (18; 18a-18e) which supports the housing (1; 1a-1e) against turning during the tightening of the straining screw (2), and the extension part (18; 18a-18e) exhibits an upper wall made of two wall segments (19, 19a-19e; 20, 20c, 20d) which overlap each other and an upward-projecting wall (21; 21a-21d) to the side of the base (12) which by means of a segment (22; 22a-22d) which bends around, makes a transition into the upper (19, 19a-19e) of the wall segments which overlap each other, characterized by the fact that the lower (20; 20c; 20d) of the overlapping wall segments (19, 19a-19e; 20, 20c, 20d) of the upper wall of the extension part (18; 18a-18e) extends in part to the inner side of the wall (21; 21a-21d) projecting up from the base (12), and in part into a cutout (24; 24a) of the segment (22; 22a-22d) which is bent around.

2. Housing in accordance with Claim 1, characterized by the fact that the cutout (24) is a slot which projects out, in the longitudinal direction of the segment (22; 22a-22d) which is bent around, from the extension part (18; 18a-18d) opening edge which lies on the side of the straining screw head (6).

3. Housing in accordance with Claim 1 or 2, characterized by the fact that the wall segments (18; 18a-18d) which overlap each other extend tangentially to the circumference of the clamp over the entire length of the extension part (18; 18a-18d).

4. Housing in accordance with one of the Claims 1 through 3, characterized by the fact that the upper wall segment (19a) of the extension part (18a) is vaulted.

5. Housing in accordance with one of the Claims 1 through 4, characterized by the fact that the segment (22b) which is bent around is flat and makes an obtuse angle with the upper wall segment (19) and the upward-projecting wall (21b).

6. Housing in accordance with one of the Claims 1 through 4, characterized by the fact that the segment (22c) which is bent around is flat in the end regions (28, 29) which are adjacent to the opening edges of the extension part (18c) and is bent into an approximately triangular cross-section in a middle region (30) between the end regions (28, 29), that the end regions (28, 29) make an obtuse angle with the upper wall segment (19) and the upward-projecting wall (21c), and that the lower wall segment (20c) of the upper wall engages with a projection (31) in the middle region (30).

7. Housing in accordance with one of the Claims 1 through 6, characterized by the fact that the upper and the lower wall segments (19, 20) are joined as a single piece of material.

8. Housing in accordance with Claim 7, characterized by the fact that the joining as a single piece of material is formed by means of spot welds, preferably projection welds (31).

9. Housing in accordance with one of the Claims 1 through 8, characterized by the fact that the segment which is bent around exhibits beads (32) running in the direction of its bend.

10. Housing in accordance with one of the Claims 1 through 9, characterized by the fact that the housing (1) exhibits hardened steel, and the housing upper part (4) a reverse-lock tab (26) for engagement into a circumferential groove (27) of the straining screw (2) between head (6) and thread (5).

11. Housing in accordance with one of the Claims 1 through 10, characterized by the fact that the part (23) of the lower wall segment (21) which extends into the cutout (24a) of the segment (22) which is bent around exhibits a distance (a) from the upper wall segment (19e) edge which lies to the side of the straining screw head (2).

12. Housing in accordance with Claim 11, characterized by the fact that the distance (a) at least approximately corresponds to Π[pi]·Δ[delta]d, where Δ[delta]d corresponds to the change of the outside diameter, in dependency on the temperature within the permissible operating temperature range of the hose, of a hose made of elastomeric material and clamped by the worm drive hose clamp.

## Revendications

1. Boîtier monobloc (1 ; 1a-1e) d'un collier de serrage à vis tangente, comprenant une partie supérieure bombée (4) destinée à recevoir la tige d'une vis de serrage (2) munie d'une tête (6), et à soutenir la tête (6) contre l'un (7) des bords de l'ouverture de la partie supérieure (4) du boîtier ; et une partie inférieure (8 ; 8a-8e) destinée à recevoir une région extrême (10) d'un ruban de serrage (3), pourvue de segments filetés (9), par pénétration du filetage (5) de la vis de serrage dans les segments filetés (9), et à recevoir l'autre région extrême (11) du ruban de serrage (3) par liaison, à concordance de formes, avec le fond (12) du boîtier (1 ; 1a-1e), la partie inférieure (8 ; 8a-8e) du boîtier présentant seulement une zone latérale (18 ; 18a-18e) en porte-à-faux qui confère, audit boîtier (1 ; la-le), un appui empêchant une rotation lors du blocage de la vis de serrage (2), et la zone (18 ; 18a-18e) en porte-à-faux comprenant une paroi supérieure constituée de deux régions de paroi (19, 19a-19e ; 20, 20c, 20d) se chevauchant, et une paroi latérale (21 ; 21a-21d) qui se dresse vers le haut à partir du fond (12) et fusionne, par l'intermédiaire d'une région repliée (22 ; 22a-22d), dans la région supérieure (19 ; 19a-19e) parmi les régions de paroi se chevauchant, caractérisé par le fait que la région inférieure (20 ; 20c ; 20d), parmi les régions de paroi (19, 19a-19e ; 20, 20d, 20d) se chevauchant dans la paroi supérieure de la zone (18 ; 18a-18e) en porte-à-faux, s'étend en partie jusqu'à la face interne de la paroi (21 ; 21a-21d) se dressant vers le haut à partir du fond (12), et s'engage en partie dans une dépouille (24 ; 24a) de la région repliée (22 ; 22a-22d).

2. Boîtier selon la revendication 1, caractérisé par le fait que la dépouille (24) est une fente pénétrant, dans la direction longitudinale de la région repliée (22 ; 22a-22d), à partir du bord de l'ouverture de la zone (18 ; 18a-18d) en porte-à-faux qui est situé du côté de la tête (6) de la vis de serrage.

3. Boîtier selon la revendication 1 ou 2, caractérisé par le fait que les régions de paroi (18 ; 18a-18d), se chevauchant mutuellement, s'étendent tangentiellement au pourtour du collier de serrage sur toute la longueur de la zone (18 ; 18a-18d) en porte-à-faux.

4. Boîtier selon l'une des revendications 1 à 3, caractérisé par le fait que la région supérieure (19a) de la paroi de la zone (18a) en porte-à-faux est bombée.

5. Boîtier selon l'une des revendications 1 à 4, caractérisé par le fait que la région repliée (22b) est plane et décrit un angle obtus avec la région supérieure (19) de paroi et avec la paroi (21b) se dressant vers le haut.

6. Boîtier selon l'une des revendications 1 à 4, caractérisé par le fait que la région repliée (22c) est plane dans des parties extrêmes (28, 29) adjacentes aux bords des ouvertures de la zone (18c) en porte-à-faux, et est coudée à peu près triangulairement, en coupe transversale, dans une partie centrale (30) entre les parties extrêmes (28, 29) ; par le fait que les parties extrêmes (28, 29) décrivent un angle obtus avec la région supérieure (19) de paroi et avec la paroi (21c) se dressant vers le haut ; et par le fait que la région inférieure (20c) de la paroi supérieure pénètre dans la partie centrale (30) par une protubérance (31).

7. Boîtier selon l'une des revendications 1 à 6, caractérisé par le fait que les régions supérieure et inférieure (19, 20) de paroi font l'objet d'une liaison matérielle.

8. Boîtier selon la revendication 7, caractérisé par le fait que la liaison matérielle est formée par des soudures par points, préférentiellement des soudures (31) par bossages.

9. Boîtier selon l'une des revendications 1 à 8, caractérisé par le fait que la région repliée comporte des moulures (32) s'étendant dans la direction de son coudage.

10. Boîtier selon l'une des revendications 1 à 9, caractérisé par le fait que ledit boîtier (1) comprend de l'acier trempé, et la partie supérieure (4) dudit boîtier présente une patte (26) interdisant une rotation rétrograde et conçue pour pénétrer dans une rainure circonférentielle (27) de la vis de serrage (2), entre la tête (6) et le filetage (5).

11. Boîtier selon l'une des revendications 1 à 10, caractérisé par le fait que la partie (23) de la région inférieure (21) de paroi, s'engageant dans la dépouille (24a) de la région .repliée (22), présente une distance (a) par rapport à l'arête de la région supérieure (19e) de paroi qui est située du côté de la tête (2) de la vis de serrage.

12. Boîtier selon la revendication 11, caractérisé par le fait que la distance (a) est au moins sensiblement égale à π·Δd, Ad correspondant à la variation du diamètre extérieur d'un flexible en un matériau élastomère, enserré par le collier de serrage à vis tangente, en fonction de la température dans la plage admissible de températures de service dudit flexible.
